# FASCICULE DE BREVET EUROPEEN

(11) **EP 4 556 417 B1**
(45) Date de publication et mention de la délivrance du brevet: **04.03.2026**
(21) Numéro de dépôt: 24206333.7
(22) Date de dépôt: 14.10.2024
(51) Int. Cl.: B65G 69/28, B65G 69/00, G05B 19/048, B60P 1/44, G06Q 10/08

(54) **PROCÉDÉ DE COMMANDE D'UN ÉQUIPEMENT DE QUAI DE CHARGEMENT ET DISPOSITIF DE COMMANDE ASSOCIÉ**
VERFAHREN ZUR STEUERUNG EINER LADERAMPE UND ZUGEHÖRIGE STEUERUNGSVORRICHTUNG
METHOD FOR CONTROLLING LOADING DOCK EQUIPMENT AND CONTROL DEVICE THEREFOR

(30) Priorité: 20.11.2023 FR 2312751
(43) Date de publication de la demande: 21.05.2025
(73) Titulaire: Jean Chereau SAS, 50220 DUCEY-LES-CHERIS (FR)
(72) Inventeur: THIERRY, Franklin, 50220 DUCEY-LES-CHERIS (FR); BIGOT, Vincent, 50220 DUCEY-LES-CHERIS (FR)
(74) Mandataire: Casalonga

(56) Documents cités:
- EP-A1- 3 489 176
- EP-A1- 3 925 912
- WO-A1-2017/108201
- US-A1- 2020 180 881

## Description

La présente invention concerne le domaine des véhicules routiers de transport de marchandises, tels des semi-remorques, des remorques ou des porteurs, et plus particulièrement un dispositif de commande d'un équipement d'un quai de chargement et un procédé associé.

Classiquement, un véhicule routier de transport de marchandises est accosté à un quai de chargement d'un entrepôt pour charger ou décharger des marchandises contenues dans le véhicule routier.

Lors de ces opérations, un chargeur transborde les marchandises entre le véhicule routier et l'entrepôt.

Afin d'empêcher la chute du chargeur entre le quai de chargement et le véhicule pendant les opérations de chargement et déchargement, il est nécessaire d'empêcher un éventuel déplacement du véhicule routier.

Dans ce but, il est possible d'actionner des moyens d'immobilisation du véhicule routier lorsqu'un rideau du quai de chargement a été relevé, ou lorsqu'une passerelle a été abaissée, en vue de ces opérations de chargement/déchargement des marchandises. Pour plus de détails, on pourra par exemple se référer à la demande de brevet FR 3 111 340 (Chéreau).

WO2017/108201 A1 divulgue un procédé de commande d'un équipement de quai de chargement qui est mobile entre une position de non-utilisation et une position de chargement/ déchargement, le procédé comprenant :- une étape de détection d'un véhicule routier de transport de marchandises par des moyens de détection disposés sur le quai de chargement,-une étape d'établissement d'un canal de communication entre des moyens de contrôle du déplacement de l'équipement qui sont disposés sur le quai et des moyens de contrôle disposés sur le véhicule,- une étape d'actionnement manuel de moyens de commande à actionnement manuel pour commander le déplacement de l'équipement de la position de non-utilisation vers la position de chargement/déchargement,- une étape d'immobilisation en position du véhicule lorsque le canal de communication est établi et si la distance minimale entre le véhicule et le quai est inférieure ou égale à une distance de détection prédéterminée, et- une étape de déplacement de l'équipement vers la position de chargement/déchargement.

WO 2017/108201 A1 divulgue également un dispositif de commande d'un équipement de quai de chargement qui est mobile entre une position de non-utilisation et une position de chargement/déchargement, le dispositif comprenant : - des moyens de détection disposés sur le quai de chargement et configurés pour détecter un véhicule routier de transport de marchandises, - des moyens d'émission disposés sur le quai, - des moyens de réception disposés sur le quai, - des moyens de réception disposés sur le véhicule, - des moyens d'émission disposés sur le véhicule, - des moyens de contrôle du déplacement de l'équipement qui sont disposés sur le quai et des moyens de contrôle disposés sur le véhicule, - des moyens de commande à actionnement manuel disposés sur le quai et configurés pour commander le déplacement de l'équipement de la position de non-utilisation vers la position de chargement/ déchargement, - des moyens d'immobilisation en position du véhicule.

Cependant, avec cette solution antérieure, le rideau du quai de chargement se relève, ou la passerelle s'abaisse, indépendamment de la présence d'un véhicule accosté au quai.

Dès lors, un opérateur peut chuter du quai de chargement si aucun véhicule n'est accosté au quai.

La présente invention vise à remédier à cet inconvénient.

L'invention a pour objet un procédé de commande d'un équipement de quai de chargement qui est mobile entre une position de non-utilisation et une position de chargement/déchargement.

Le procédé comprend une étape de détection d'un véhicule routier de transport de marchandises par des moyens de détection disposés sur le quai de chargement.

Le procédé comprend en outre :
- une étape d'émission d'un signal d'initialisation par des moyens d'émission disposés sur le quai lorsque le véhicule routier est détecté par les moyens de détection,
- une étape de réception du signal d'initialisation par des moyens de réception disposés sur le véhicule,
- une étape d'émission d'un signal d'identification émis par des moyens d'émission disposés sur le véhicule lors de la réception du signal d'initialisation par les moyens de réception,
- une étape de réception, par des moyens de réception disposés sur le quai, du signal d'identification émis par les moyens d'émission,
- une étape d'établissement d'un canal de communication entre des moyens de contrôle du déplacement de l'équipement qui sont disposés sur le quai et des moyens de contrôle disposés sur le véhicule lorsque les moyens de réception disposés sur le quai réceptionnent le signal d'identification,

Le procédé comprend également :
- une étape d'actionnement manuel de moyens de commande à actionnement manuel pour commander le déplacement de l'équipement de la position de non-utilisation vers la position de chargement/déchargement,
- une étape d'immobilisation en position du véhicule lors de l'actionnement manuel des moyens de commande à actionnement manuel lorsque le canal de communication est établi et si la distance minimale entre le véhicule et le quai déterminée par les moyens de détection est inférieure ou égale à une distance de détection prédéterminée, et
- une étape de déplacement de l'équipement vers la position de chargement/déchargement uniquement après la réception d'un signal de verrouillage par les moyens de contrôle du déplacement de l'équipement, ledit signal de verrouillage étant émis par les moyens de contrôle disposés sur le véhicule lorsque le véhicule est immobilisé en position.

Par « distance minimale entre le véhicule et le quai », on entend la distance la plus petite qui existe entre le quai et le véhicule, cette distance étant généralement prise entre le quai et les rouleaux ou butoirs d'accostage du véhicule.

Avec le procédé de l'invention, le déplacement de l'équipement vers sa position de chargement/déchargement est réalisé uniquement si un véhicule routier de transport de marchandises est présent devant le quai et si ce véhicule est immobilisé. Ainsi, la probabilité de chute du quai de l'opérateur est fortement réduite.

En outre, lorsque le canal de communication est établi entre les moyens de contrôle du quai et les moyens de contrôle du véhicule, des données d'exploitation peuvent être échangées entre le quai et le véhicule permettant d'accélérer la transmission des données d'exploitation qui s'effectue classiquement par l'échange de bordereaux papier entre le conducteur du véhicule et un opérateur du quai.

De préférence, le signal d'initialisation est émis par les moyens d'émission disposés sur le quai lorsqu'en outre la distance minimale déterminée par les moyens de détection est inférieure ou égale à la distance de détection prédéterminée.

Avantageusement, le canal de communication est établi entre des moyens de contrôle du déplacement de l'équipement qui sont disposés sur le quai et des moyens de contrôle disposés sur le véhicule lorsqu'en outre la distance minimale déterminée par les moyens de détection est inférieure ou égale à la distance de détection prédéterminée.

De préférence, l'étape d'immobilisation en position du véhicule comprend :
- une étape d'émission par les moyens de contrôle du quai d'un signal d'activation dans le canal de communication,
- une étape d'actionnement de moyens d'immobilisation en position du véhicule, les moyens d'immobilisation étant activés par les moyens de contrôle disposés sur le véhicule lors de la réception du signal d'activation par lesdits moyens de contrôle, les moyens d'immobilisation étant disposés sur le véhicule, et
- une étape d'émission du signal de verrouillage à travers le canal de communication par les moyens de contrôle lorsque le véhicule est immobilisé en position par les moyens d'immobilisation,
- l'étape de déplacement de l'équipement vers la position de chargement/déchargement étant réalisée uniquement après la réception du signal de verrouillage par les moyens de contrôle disposés sur le quai.

Dans un mode de réalisation, l'actionnement des moyens d'immobilisation du véhicule comprend l'activation d'un dispositif de freinage de parc dudit véhicule.

De préférence, le dispositif de freinage de parc du véhicule comprend un vase à ressort actionnant des freins du véhicule, l'activation du dispositif de freinage de parc dudit véhicule comporte la dépressurisation du vase à ressort, le signal de verrouillage étant émis par des moyens de contrôle à travers le canal de communication lorsque la pression d'une chambre du vase à ressort est inférieure ou égale à une pression prédéterminée.

Avantageusement, l'activation du dispositif de freinage de parc du véhicule comprend la dépressurisation d'un vase à ressort dudit dispositif pour actionner les freins du véhicule.

Dans un autre mode de réalisation, l'actionnement des moyens d'immobilisation du véhicule comprend l'émission d'un signal d'anti-démarrage, le signal d'anti-démarrage étant configuré pour éteindre un moteur de propulsion du véhicule ou empêcher le démarrage dudit moteur.

De préférence, le signal d'anti-démarrage comprend une tension continue prédéterminée qui est générée par les moyens de contrôle et qui est transmise à une unité de contrôle du moteur de propulsion du véhicule routier de transport de marchandises.

Dans encore un autre mode de réalisation, l'actionnement des moyens d'immobilisation du véhicule comprend l'émission d'un signal de freinage, le signal de freinage étant configuré pour activer un dispositif de freinage du véhicule ou empêcher la désactivation dudit dispositif de freinage.

De préférence, le signal de freinage du véhicule comprend une tension continue prédéterminée qui est générée par les moyens de contrôle et qui est transmise à une unité de contrôle du dispositif de freinage du véhicule.

Dans un autre mode de réalisation, l'actionnement des moyens d'immobilisation du véhicule comprend à la fois l'émission du signal de freinage et l'émission du signal d'anti-démarrage.

Avantageusement, le signal d'activation comprend un signal d'activation électromagnétique et le signal de verrouillage comprend un signal de verrouillage électromagnétique. Par exemple, le signal d'activation et le signal de verrouillage peuvent chacun comprendre un signal radio.

En variante, il est possible de prévoir d'autres type de signaux que des signaux électromagnétiques. Par exemple, le signal d'activation et le signal de verrouillage peuvent chacun comprendre un signal lumineux issu par exemple de lasers.

Avantageusement, le procédé comporte en outre au moins un échange de données d'exploitation par le canal de communication entre les moyens de contrôle disposés sur le quai et les moyens de contrôle disposés sur le véhicule.

De préférence, les moyens de détection délivrent un signal d'alarme lorsque la valeur absolue de la dérivée temporelle de la distance minimale déterminée est supérieure à un seuil d'alarme prédéterminé.

Avantageusement, les moyens de détection déterminent en permanence, i.e. en continu, la distance minimale entre le véhicule et le quai.

Dans un mode de réalisation, l'équipement du quai de chargement comprend un rideau de fermeture de l'accès au quai de chargement mobile entre une position ouverte de chargement/déchargement et une position fermée abaissée de non-utilisation.

Dans un autre mode de réalisation, l'équipement du quai de chargement comprend une passerelle de chargement mobile entre une position abaissée horizontale de chargement/déchargement et une position relevée de non-utilisation.

L'invention concerne également un dispositif de commande d'un équipement de quai de chargement qui est mobile entre une position de non-utilisation et une position de chargement/déchargement.

Le dispositif comprend :
- des moyens de détection disposés sur le quai de chargement et configurés pour détecter un véhicule routier de transport de marchandises et le quai,
- des moyens d'émission disposés sur le quai et configurés pour émettre un signal d'initialisation lorsque le véhicule routier est détecté par les moyens de détection,
- des moyens de réception disposés sur le quai,
- des moyens de réception disposés sur le véhicule,
- des moyens d'émission disposés sur le véhicule et configurés pour émettre un signal d'identification lors de la réception du signal d'initialisation par les moyens de réception disposés sur le véhicule,
- des moyens de contrôle du déplacement de l'équipement qui sont disposés sur le quai et des moyens de contrôle disposés sur le véhicule, les moyens de contrôle du déplacement de l'équipement et les moyens de contrôle disposés sur le véhicule étant configurés pour établir un canal de communication lorsque les moyens de réception disposés sur le quai réceptionnent le signal d'identification émis par les moyens d'émission disposés sur le véhicule,
- des moyens de commande à actionnement manuel disposés sur le quai et configurés pour commander le déplacement de l'équipement de la position de non-utilisation vers la position de chargement/déchargement,
- des moyens d'immobilisation en position du véhicule configurés pour immobiliser le véhicule en position lors de l'actionnement manuel des moyens de commande à actionnement manuel, lorsque le canal de communication est établi et si la distance minimale entre le véhicule et le quai déterminée par les moyens de détection est inférieure ou égale à une distance de détection prédéterminée, les moyens de contrôle du véhicule étant en outre configurés pour commander les moyens d'immobilisation et émettre un signal de verrouillage lorsque le véhicule est immobilisé en position,
- les moyens de contrôle du déplacement de l'équipement étant en outre configurés pour rendre inopérant l'actionnement manuel des moyens de commande pour empêcher le déplacement de l'équipement de la position de non-utilisation vers la position de chargement/déchargement lorsque le véhicule n'est pas immobilisé en position en l'absence de la réception d'un signal du verrouillage par les moyens de contrôle du déplacement de l'équipement.

De préférence :
- les moyens de contrôle du déplacement de l'équipement sont en outre configurés pour émettre un signal d'activation dans le canal de communication,
- les moyens de contrôle disposés sur le véhicule sont en outre configurés pour activer les moyens d'immobilisation en position du véhicule routier de transport de marchandises lors la réception du signal d'activation, et pour émettre le signal de verrouillage dans le canal de communication lorsque le véhicule est immobilisé en position par les moyens d'immobilisation, et
- les moyens de contrôle du déplacement de l'équipement sont en outre configurés pour rendre inopérant, en l'absence du signal de verrouillage, l'actionnement manuel des moyens de commande pour empêcher le déplacement de l'équipement de la position de non-utilisation vers la position de chargement/déchargement.

Avantageusement, les moyens d'immobilisation comprennent un dispositif de freinage de parc du véhicule.

De préférence, le dispositif de freinage de parc du véhicule comprend un vase à ressort configuré pour actionner des freins du véhicule, les moyens de contrôle du véhicule étant configurés pour dépressuriser le vase à ressort et émettre le signal de verrouillage lorsque la pression à un orifice du vase à ressort est inférieure ou égale à une pression prédéterminée.

La présente invention sera mieux comprise à l'étude de la description détaillée de modes de réalisation pris à titre d'exemples nullement limitatifs et illustrés par les dessins annexés, sur lesquels :

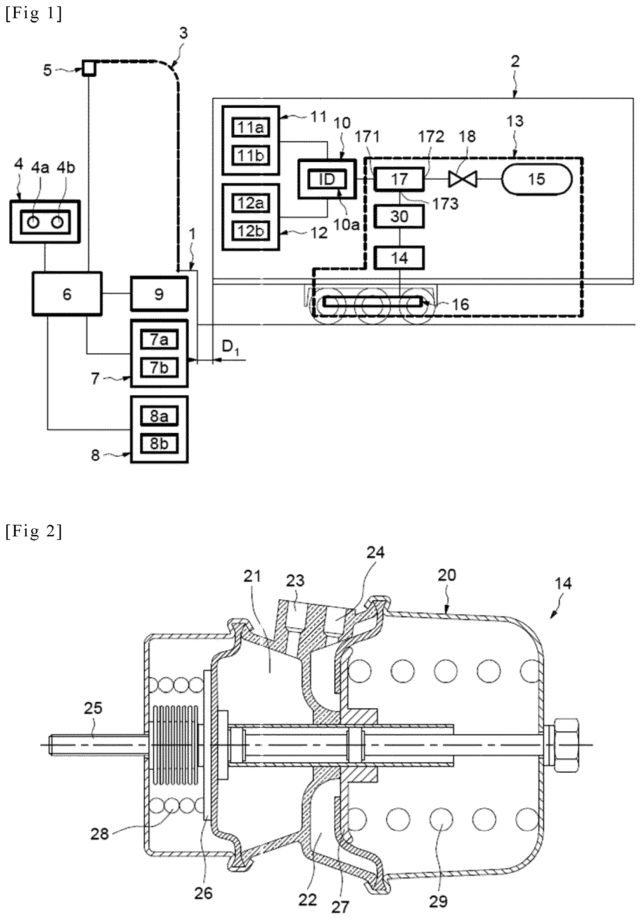

[Fig 1] illustre schématiquement un exemple de réalisation d'un véhicule routier de transport de marchandises lors de la mise à quai selon un exemple de l'invention ;
[Fig 2]
[Fig 3] sont des vues en coupe longitudinale d'un vase à ressort du véhicule de la figure 1 ;
[Fig 4] illustre schématiquement un exemple de moyens d'immobilisation selon l'invention ;
[Fig 5]

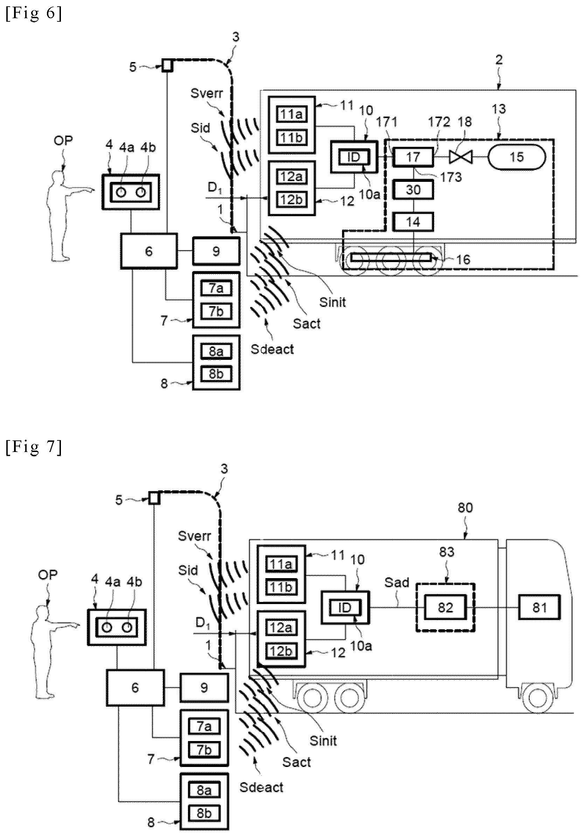

[Fig 6] illustrent un exemple de mise en œuvre d'un procédé de commande d'un équipement du quai de chargement selon l'invention ;
[Fig 7] illustre schématiquement un autre exemple de réalisation du véhicule routier de transport de marchandises lors de sa mise à quai selon encore un autre exemple de l'invention, et

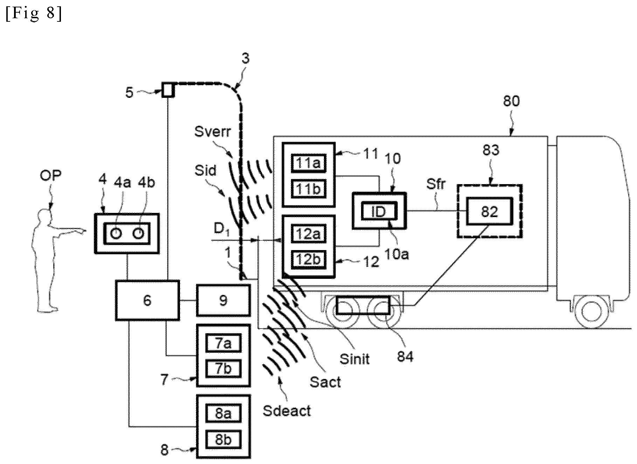

[Fig 8] illustre schématiquement encore un autre exemple de réalisation du véhicule routier de transport de marchandises lors de sa mise à quai selon encore un autre exemple de l'invention.

La figure 1 illustre schématiquement un véhicule routier de transport de marchandises lors de l'accostage dudit véhicule à un quai de chargement 1.

Le véhicule routier est ici une semi-remorque 2.

En variante, le véhicule routier pourrait être une remorque.

Le quai de chargement 1 est équipé d'un rideau de fermeture 3 de l'accès au quai de chargement mobile entre une position fermée abaissée et une position ouverte relevée pour le chargement et le déchargement. La position entièrement ouverte ou partiellement ouverte du rideau 3 correspond à une position de chargement/déchargement, et la position fermée du rideau correspond à une position de non-utilisation. Sur la figure 1, le rideau 3 est en position fermée.

Le quai de chargement 1 comprend également des moyens de commande 4 à actionnement manuel pour commander le déplacement du rideau 3. De manière connue en soi, le rideau 3 est équipé d'un moyen d'entraînement (non représenté), par exemple un moteur électrique pour permettre son déplacement entre la position de chargement/déchargement et la position de non-utilisation, et inversement. Une unité de contrôle 5 est également prévue pour le pilotage du moyen d'entraînement du rideau 3.

Les moyens de commande 4 du rideau peuvent par exemple être prévus du côté intérieur de l'entrepôt équipé du quai de chargement 1. Les moyens de commande 4 peuvent par exemple comprendre un premier bouton-poussoir 4a pour que l'utilisateur du quai puisse commander l'ouverture du rideau 3, et un deuxième bouton-poussoir 4b pour commander la fermeture de ce dernier. Les moyens de commande 4 peuvent par exemple se présenter sous la forme d'un boitier positionné sur un mur de l'entrepôt ou sous la forme d'une télécommande.

Le quai de chargement 1 comprend en outre des moyens de contrôle 6 reliés aux moyens de commande 4 et à l'unité de contrôle 5, des moyens d'émission 7 et des moyens de réception 8 reliés aux moyens de contrôle 6, et des moyens de détection 9 reliés aux moyens de contrôle 6.

Les moyens de contrôle 6 sont reliés aux moyens de commande 4 par une connexion qui est par exemple de type filaire ou radioélectrique ou encore réalisée par l'intermédiaire d'un bus de communication.

Les moyens de contrôle 6 comprennent par exemple une unité de traitement.

Les moyens d'émission 7 et de réception 8 peuvent être réalisés sous la forme de deux boitiers séparés tel que représenté ou d'un boitier unique.

Les moyens de détection 9 sont aptes à détecter la présence de la semi-remorque 2. Dans l'exemple de réalisation illustré, les moyens de détection 9 sont également aptes à déterminer la distance minimale entre la semi-remorque 2 et le quai 1. Les moyens de détection 9 comprennent par exemple un radar à ultrasons.

Les moyens de détection 9 peuvent détecter et déterminer la distance minimale à partir d'autres technologies en mettant en œuvre des technologies optiques implémentant par exemple un laser.

Les moyens d'émission 7 disposés sur le quai 1 sont aptes à émettre un signal d'initialisation Sinit lorsqu'un véhicule routier est détecté par les moyens de détection 9.

Comme cela sera décrit plus en détail par la suite, les moyens de contrôle 6 disposés sur le quai 1 sont aptes à rendre inopérant l'actionnement manuel des moyens de commande 4 lorsque la semi-remorque 2 n'est pas immobilisée en position.

Comme cela sera également décrit plus en détail par la suite, les moyens de contrôle 6 disposés sur le quai 1 sont en outre aptes à délivrer, après actionnement des moyens de commande 4, un signal de commande pour le déplacement de l'équipement 3 de la position de non-utilisation vers la position de chargement/déchargement uniquement en présence d'un signal de verrouillage Sverr des freins de la semi-remorque.

Les moyens de contrôle 6 disposés sur le quai 1 sont aptes à rendre inopérant, en l'absence du signal de verrouillage Sverr, l'actionnement manuel des moyens de commande 4 pour empêcher le déplacement de l'équipement 3 de la position de non-utilisation vers la position de chargement/déchargement.

La semi-remorque 2 comprend des moyens de contrôle 10, des moyens d'émission 11 et des moyens de réception 12 reliés aux moyens de contrôle 10, et des moyens d'immobilisation 13 en position commandés par les moyens de contrôle 10.

Les moyens de contrôle 10 comprennent par exemple une unité de traitement.

Les moyens d'émission 11 et de réception 12 peuvent être réalisés sous la forme de deux boitiers séparés tel que représenté ou d'un boitier unique.

Comme cela sera décrit plus en détail par la suite, les moyens d'émission 11 disposés sur la semi-remorque 2 sont aptes à émettre un signal d'identification S_{ID} lors de la réception du signal d'initialisation Sinit par les moyens de réception 12 disposés sur le véhicule 2.

Le signal d'identification Sid comprend un identifiant ID de la semi-remorque 2 stocké par exemple dans une mémoire 10a des moyens de contrôle 10 de la semi-remorque 2.

Les moyens d'émission 7 du quai 1 comprennent par exemple un premier dispositif d'émission 7a du type identification par radiofréquence RFID « Radio Frequency Identification » en anglais, et les moyens de réception 8 du quai 1 comprennent par exemple un premier dispositif de réception 8a du type identification par radiofréquence RFID. Les moyens d'émission 11 de la semi-remorque 2 comprennent par exemple un premier dispositif d'émission 11a du type identification par radiofréquence RFID, et les moyens de réception 12 de la semi-remorque 2 comprennent par exemple un premier dispositif de réception 12a du type identification par radiofréquence RFID.

Les signaux d'initialisation Sinit et d'identification Sid sont de type électromagnétique, par exemple radio.

La portée d'émission des signaux d'initialisation Sinit et d'identification Sid par les moyens d'émission 7, 11 est choisie de sorte que seule les moyens de réception 12 captent le signal d'initialisation Sinit émis par les moyens d'émission 7 du quai 1 et de sorte que seul les moyens de réception 8 captent le signal d'identification Sid émis par les moyens d'émission 11 de la semi-remorque 2 pour d'empêcher des interférences entre plusieurs quais de chargement disposés à proximité les uns des autres, permettant d'empêcher des interférences entre lesdits quais équipés chacun de moyens d'émission 7 propres.

Les moyens d'émission 7, 11 et les moyens de réception 8, 12 peuvent en variante mettre en œuvre un autre protocole de communication.

Les moyens de contrôle 6 disposés sur le quai 1 et les moyens de contrôle 10 disposés sur la semi-remorque 2 sont en outre aptes à établir un canal de communication lorsque les moyens de réception 8 disposés sur le quai 1 réceptionnent le signal d'identification S_{ID} émis par les moyens d'émission 11 disposés sur la semi-remorque 2.

Les moyens de contrôle 6 disposés sur le quai 1 et les moyens de contrôle 10 disposés sur la semi-remorque 2 sont aptes à échanger des données à travers le canal de communication en mettant en œuvre un protocole de communication utilisant par exemple une onde électromagnétique du type « Bluetooth » en anglais ou une onde radio.

Les moyens d'émission 7 du quai 1 comprennent par exemple un deuxième dispositif d'émission 7b du type « Bluetooth », et les moyens de réception 8 du quai 1 comprennent par exemple un deuxième dispositif de réception 8b du type « Bluetooth ». Les moyens d'émission 11 de la semi-remorque 2 comprennent par exemple un deuxième dispositif d'émission 11b du type « Bluetooth » et les moyens de réception 12 de la semi-remorque comprennent par exemple un deuxième dispositif de réception 12b du type « Bluetooth ».

Les moyens d'émission 7, 11 et les moyens de réception 8, 12 peuvent en variante mettre en œuvre un autre protocole de communication permettant des échanges de données bidirectionnelles entre les moyens de contrôle 6 disposés sur le quai 1 et les moyens de contrôle 10 disposés sur la semi-remorque.

Comme cela sera décrit plus en détail par la suite, les moyens de contrôle 6 du quai 1 sont en outre configurés pour émettre un signal d'activation Sact dans le canal de communication.

Comme cela sera également décrit plus en détail par la suite, les moyens de contrôle 10 disposés sur la semi-remorque sont en outre aptes à activer les moyens d'immobilisation 13 en position de la semi-remorque lors la réception du signal d'activation Sact, et à émettre un signal de verrouillage Sverr dans le canal de communication lorsque la semi-remorque 2 est immobilisée en position par les moyens d'immobilisation 13.

Comme décrit dans ce qui suit, les moyens d'immobilisation 13 en position du véhicule sont configurés pour immobiliser le véhicule en position lors de l'actionnement manuel des moyens de commande 4 à actionnement manuel, lorsque le canal de communication est établi et si la distance minimale entre le véhicule et le quai déterminée par les moyens de détection 9 est inférieure ou égale à une distance de détection prédéterminée.

La distance de détection prédéterminée est choisie selon la configuration du quai 1 et peut par exemple être égale à 40 cm, 50 cm ou un mètre.

Sur la figure 1, la semi-remorque 2 est représentée dans une position de mise à quai par rapport au quai de chargement 1. La distance entre l'extrémité la plus proche de la semi-remorque 2 et la quai 1 est référencée D₁. Cette distance D₁ est la distance minimale entre la semi-remorque 2 et le quai.

Dans l'exemple de réalisation illustré, les moyens d'immobilisation 13 comprennent un dispositif de freinage de parc comprenant un vase à ressort 14 à double diaphragmes pilotant le frein de parc de la semi-remorque 2, des bouteilles 15 d'air comprimé reliées au vase à ressort 14, des freins 16 actionnés par le vase à ressort 14, un circuit de pilotage 17 du vase à ressort et un manocontact 30 disposé entre le circuit de pilotage 17 et le vase à ressort 14. Les bouteilles 15 assurent une alimentation pneumatique autonome de la semi-remorque 2.

Le circuit de pilotage 17 comprend une première entrée de commande 171 reliée aux moyens de contrôle 10. Le circuit de pilotage 17 comprend également une première connexion pneumatique 172 reliée aux bouteilles 15 par l'intermédiaire d'un robinet de frein de parc 18, et une deuxième connexion pneumatique 173 reliée à une première connexion du manocontact 30. Le manocontact 30 comprend une deuxième connexion reliée au vase à ressort 14.

Les freins 16 permettent d'immobiliser en position la semi-remorque 2 lorsqu'ils sont actionnés. Les freins 16 peuvent être du type à disque ou à tambour.

Comme illustré à la figure 2, le vase à ressort 14 comprend une enveloppe 20 délimitant intérieurement deux chambres 21, 22.

La première chambre 21 comprend un premier orifice 23 et la deuxième chambre 22 comprend un deuxième orifice 24 relié à la deuxième connexion pneumatique 173.

Le vase à ressort 14 comprend une tige 25 de commande actionnant ou désactivant les freins 16, et reliée respectivement à un premier diaphragme 26 disposé dans la première chambre 21 et à un deuxième diaphragme 27 disposé dans la deuxième chambre 22.

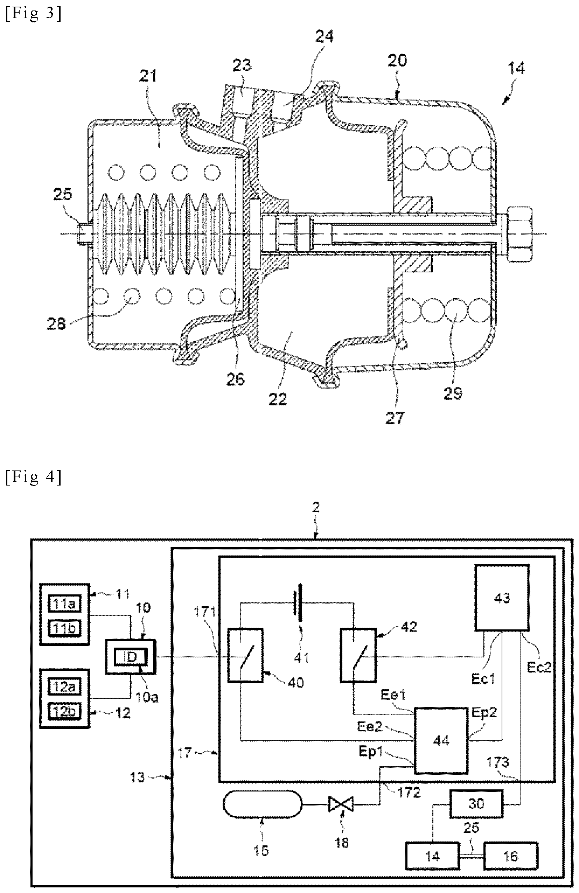

Un premier ressort 28 est disposé entre le premier diaphragme 26 et l'enveloppe 20 à l'intérieur de la première chambre 21, et un deuxième ressort 29 est disposé entre le deuxième diaphragme 27 et l'enveloppe 20 à l'intérieur de la deuxième chambre 22 de sorte que lorsque aucune pression n'est appliquée au travers du deuxième orifice 24, le deuxième ressort 29 comprime le premier ressort 28 de manière à sortir la tige 25 de la première chambre 21 pour actionner les freins 16 (mode frein de parc), et de sorte que lorsqu'une pression suffisante est appliquée au travers du deuxième orifice 24 et aucune pression n'est appliquée au travers du premier orifice 23, la tige 26 est rentrée dans la première chambre 21 pour désactiver les freins 14 tel que représenté à la figure 3.

Si une pression suffisante est appliquée au travers du premier orifice 23 et qu'une pression suffisante n'est pas appliquée au travers du deuxième orifice 24, la tige 26 actionne les freins 14 (mode frein de service).

Le manocontact 30 mesure la pression de la deuxième chambre 22 pour vérifier l'état des freins.

Lorsque la pression mesurée par le manocontact 30 est égale ou inférieure à une pression prédéterminée, par exemple 3,5 bars, les freins 14 sont actionnés (mode frein de parc).

Lorsque la pression mesurée par le manocontact 30 est supérieure à la pression prédéterminée, les freins 14 sont libérés.

Le manocontact 30 délivre un signal représentatif de l'état d'actionnement des freins 14 aux moyens de contrôle 10 disposés sur le véhicule 2.

Bien entendu, le vase à ressort 14 peut être réalisé selon une autre conception. Le vase à ressort 14 peut par exemple comprendre des éléments mobiles en silicone ou tout autre matériau adapté. De manière générale, le vase à ressort comprend une première chambre permettant d'activer le frein de service et une deuxième chambre permettant d'activer le frein de parc.

La figure 4 illustre schématiquement un premier mode de réalisation des moyens d'immobilisation 13.

Les moyens de contrôle 10 sont reliés aux moyens d'immobilisation 16 de la semi-remorque 2.

Les moyens de contrôle 10 sont reliés à l'entrée de commande 171 du circuit de pilotage 17 du vase à ressort.

Le circuit de pilotage 17 du vase à ressort comprend un premier interrupteur 40 relié à l'entrée de commande 171 pour être commandé par les moyens de contrôle 10, une source d'alimentation électrique continue 41, un deuxième interrupteur 42, un contrôleur 43 de freinage pilotant le deuxième interrupteur 42, une valve électropneumatique 44 et le vase à ressort 14.

Le robinet 18 est normalement ouvert de sorte que les bouteilles 15 alimentent la valve électropneumatique 44.

La source d'alimentation électrique continue 41 comprend par exemple une batterie dédiée qui est incorporée dans la semi-remorque 2. Alternativement, la source d'alimentation électrique continue 41 peut être constituée par le groupe frigorifique lorsque la semi-remorque est une semi-remorque frigorifique.

Les moyens de contrôle 10 sont par exemple alimentés par la source 41 de sorte que la semi-remorque 2 ne nécessite pas de source d'alimentation extérieure pour actionner les moyens d'immobilisation 13.

Cependant, il reste possible d'alimenter les moyens de contrôle 10 par une source d'alimentation extérieure à la semi-remorque 2, la source d'alimentation extérieure comprenant par exemple un pupitre de commande.

Le contrôleur 43 de freinage peut par exemple être l'unité de contrôle du système de freinage à commande électronique de la semi-remorque 2. Alternativement, le contrôleur 43 peut être une unité de contrôle distincte de celle du système de freinage à commande électronique.

La valve électropneumatique 44 comprend une première entrée Ee1 d'alimentation électrique reliée à une première borne de la source d'alimentation électrique continue 41 par l'intermédiaire du deuxième interrupteur 42, et une deuxième entrée Ee2 d'alimentation électrique reliée à une deuxième borne de la source d'alimentation électrique continue 41 par l'intermédiaire du premier interrupteur 40 de sorte que lorsque les premier et deuxième interrupteurs 40, 42 sont fermés, la valve électropneumatique 44 est alimentée par la source d'alimentation électrique continue 41.

La valve électropneumatique 44 comprend en outre deux connexions pneumatiques, une première connexion pneumatique Ep1 étant reliée à l'entrée pneumatique 172 et la deuxième connexion pneumatique Ep2 étant reliée à une première connexion pneumatique Ec1 du contrôleur 43 de freinage.

Le contrôleur 43 de freinage comprend en outre une deuxième connexion pneumatique Ec2 reliée à la deuxième connexion pneumatique 172.

La valve électropneumatique 44 peut par exemple être une électrovanne normalement ouverte lorsqu'elle n'est pas alimentée par la source d'alimentation électrique continue 41.

Lorsque la vitesse de roulage de la semi-remorque 2 est inférieure à un seuil prédéterminé, par exemple 5 km/h, le contrôleur 43 de freinage ferme le deuxième interrupteur 42.

Ainsi lorsque la semi-remorque 2 est accosté au quai 1, le deuxième interrupteur 42 est fermé.

Le premier orifice 23 du vase à ressort 14 est relié à un circuit de commande du frein de service non représenté.

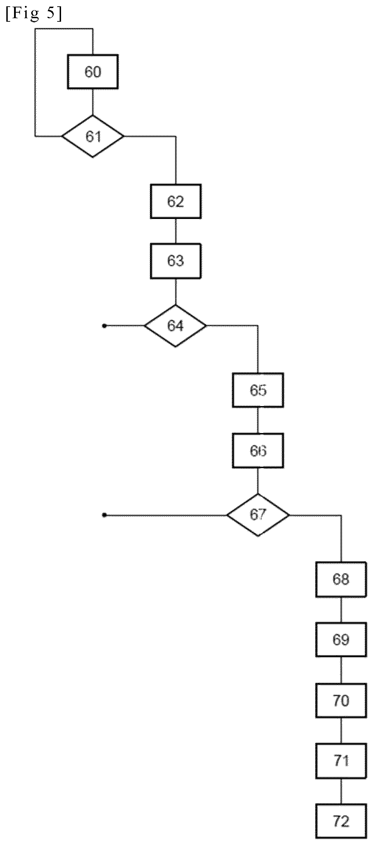

On va maintenant décrire en référence aux figures figure 5 et 6, le procédé de commande du rideau 3 de fermeture de l'accès au quai 1 de chargement.

Les moyens de détection 9 du quai, qui fonctionnent en permanence, détectent la présence de la semi-remorque 2 et déterminent la distance minimale D₁ entre celle-ci et le quai 1. Cette distance minimale est déterminée en permanence par les moyens de détection 9 lors du procédé.

Le rideau 3 est en position fermée dans la position de non-utilisation empêchant l'accès au quai 1 de chargement.

On suppose que la semi-remorque 2 s'approche du quai 1 de chargement.

Lorsque les moyens de détection 9 détectent la présence de la semi-remorque 2 à proximité du quai 1, les moyens de détection déterminent la distance D₁ (étape 60).

Si la distance D₁ déterminée est supérieure à la distance de détection prédéterminée (étape 61), le procédé se poursuit à l'étape 60.

Lorsque les moyens de détection 9 déterminent que la distance D₁ est inférieure ou égale à la distance de détection prédéterminée (étape 61), le procédé se poursuit par une étape 62 durant laquelle le premier dispositif d'émission 7a des moyens d'émission 7 du quai 1 émet le signal d'initialisation Sinit.

A la réception du signal d'initialisation Sinit par le premier dispositif de réception 12a des moyens de réception 12 disposés sur la semi-remorque 2, le premier dispositif 11a des moyens d'émission 11 disposés sur la semi-remorque 2 émet le signal d'identification Sid comportant l'identifiant ID de la semi-remorque 2 durant une étape 63.

A la réception du signal d'identification Sid par le premier dispositif de réception 8a des moyens de réception 8 disposés sur le quai 1 avant l'écoulement d'une durée prédéterminée, par exemple, trente secondes, débutant lors de l'émission du signal d'initialisation Sinit (étape 64), les moyens de contrôle 6 disposés sur le quai 1 et des moyens de contrôle 10 disposés sur la semi-remorque 2 établissent un canal de communication pour échanger des données de manière bidirectionnelle durant une étape 65. Ce canal de communication est établi entre les moyens de contrôle 6 disposés sur le quai 1 et les moyens de contrôle 10 de la semi-remorque 2.

Si les moyens de réception 8 ne réceptionnent pas le signal d'identification Sid avant l'écoulement de la durée prédéterminée débutant lors de l'émission du signal d'initialisation Sinit (étape 64), le procédé s'arrête.

Durant une étape 66, un opérateur OP actionne les moyens de commande 4 en appuyant sur le premier bouton 4a pour commander l'ouverture du rideau 3.

Un signal de commande de l'ouverture du rideau est transmis aux moyens de contrôle 6 du quai 2.

A ce stade, aucun signal de commande en direction de l'unité de contrôle 5 n'est émis par les moyens de contrôle 6 du quai 1. Ainsi, l'ordre de commande manuel de l'opérateur pour ouvrir le rideau n'est pas transmis par les moyens de contrôle 6 à l'unité de contrôle électronique 5 et la position du rideau 3 reste inchangée.

Suite à l'actionnement des moyens de commande 4 par l'opérateur OP, si la distance D₁ mesurée par les moyens de détection 9 est supérieure à la distance prédéterminée de détection (étape 67), le procédé se termine.

A l'inverse, suite à l'actionnement des moyens de commande 4 par l'opérateur OP, si la distance D₁ mesurée par les moyens de détection 9 est toujours inférieure ou égale à la distance prédéterminée de détection (étape 67), la semi-remorque 2 est immobilisée en position (étapes 68 à 70). Comme indiqué précédemment, la détermination de la distance minimale D₁ entre la semi-remorque 2 et le quai 1 est déterminée, dans ce procédé, en permanence par les moyens de détection 9. Alternativement, il pourrait être possible de prévoir une première détermination de la distance minimale à l'étape 60 et une deuxième détermination de la distance minimale à l'étape 67, les moyens de détection 9 étant inactifs entre les étapes 60 et 67.

Durant l'étape 68, les moyens de contrôle 6 du quai 1 émettent par l'intermédiaire du deuxième dispositif d'émission 7b des moyens d'émission 7 du quai 1 le signal d'activation Sact dans le canal de communication.

A la réception du signal d'activation Sact par les moyens de contrôle 10 de la semi-remorque 2 par l'intermédiaire du deuxième dispositif de réception 12b des moyens réception 12 de la semi-remorque 2, les moyens de contrôle 10 de la semi-remorque 2 actionnent les moyens d'immobilisation 13 en position de la semi-remorque 2 durant une étape 69. A la réception du signal d'activation Sact, les moyens de contrôle 10 de la semi-remorque 2 ferme le premier interrupteur 40 du circuit de pilotage 17 du vase à ressort (figure 4).

Comme la semi-remorque 2 est à l'arrêt, le deuxième interrupteur 42 du circuit de pilotage 17 est déjà en position fermée.

La valve électropneumatique 44 est ainsi alimentée par la source 41 de manière à dépressuriser la deuxième chambre 22 du vase à ressort 14. La valve électropneumatique 44 empêche l'alimentation en pression du contrôleur 43 de sorte que la deuxième chambre 22 n'est plus alimentée par les bouteilles 15, le contrôleur 43 dépressurisant la deuxième chambre 22.

Comme la deuxième chambre 22 est dépressurisée, le deuxième ressort 29 (figure 2) comprime le premier ressort 28 de manière à sortir la tige 25 de la première chambre 21 actionnant les freins 16, les freins 16 immobilisant en position la semi-remorque 2.

Lorsque les moyens d'immobilisation 13 en position de la semi-remorque 2 sont actionnés pour immobiliser en position la semi-remorque 2, le deuxième dispositif d'émission 11b des moyens d'émission 11 de la semi-remorque 2 émettent alors le signal de verrouillage Sverr dans le canal de communication durant une étape 70.

Les moyens de contrôle 10 de la semi-remorque 2 commandant les moyens d'émission 11 de la semi-remorque 2 sont par exemple reliés à un contacteur (non représenté) des moyens d'immobilisation 13 qui est activé lors de la mise à l'échappement de la deuxième chambre 22 du vase à ressort.

Si le vase à ressort 14 comprend le capteur de pression 30, celui-ci délivre le niveau de pression aux moyens de contrôle 10 de sorte que les moyens de contrôle 10 s'assurent que les freins 16 sont activés pour immobiliser la semi-remorque 2 en position.

Durant une étape 71, lorsque les moyens de contrôle 6 du quai 1 reçoivent le signal de verrouillage Sverr par l'intermédiaire du deuxième dispositif de réception 8b des moyens de réception 8 du quai 1, les moyens de contrôle 6 transmettent l'ordre de commande manuel de l'opérateur OP, qui a été demandé précédemment via l'actionnement des moyens de commande 4, à l'unité de contrôle 5 pour l'ouverture du rideau 3.

Le rideau 3 est déplacé vers la position de chargement/déchargement uniquement après la réception du signal de verrouillage Sverr par les moyens de contrôle 6 disposés sur le quai 1.

Comme le signal de verrouillage Sverr est représentatif de l'état de d'actionnement des freins 16, le rideau 3 est déplacé vers la position de chargement/déchargement uniquement après l'immobilisation en position de la semi-remorque 2. Le signal de verrouillage Sverr est représentatif de l'immobilisation en position du véhicule.

A la fin des opérations de chargement/déchargement (étape 72), lorsque l'opérateur OP actionne le deuxième bouton 4b des moyens de commande 4 pour la fermeture du rideau 3, les moyens de commande 4 émettent un signal de commande de la fermeture du rideau qui est transmis aux moyens de contrôle 6 du quai 1.

A la réception du signal de commande de la fermeture, les moyens de contrôle 6 du quai 1 émettent un signal de commande qui est délivré à l'unité de contrôle 5 pour piloter la fermeture du rideau 3.

Une fois que le rideau 3 est en position fermée, les moyens de contrôle 6 du quai 1 émettent par l'intermédiaire du deuxième dispositif d'émission 7b des moyens d'émission 7 du quai 1 un signal de désactivation Sdeact dans le canal de communication.

A la réception du signal de désactivation Sdeact par les moyens de contrôle 10 de la semi-remorque 2 par l'intermédiaire du deuxième dispositif de réception 12b des moyens réception 12 de la semi-remorque 2, durant une étape 71, les moyens de contrôle 10 de la semi-remorque 2 libèrent les freins 16.

Les moyens de contrôle 10 de la semi-remorque 2 ouvrent le premier interrupteur 40 du circuit de pilotage 17 du vase à ressort (figure 4). Ainsi, la valve électropneumatique 44 n'est plus alimentée par la source 41.

Comme la valve électropneumatique 44 n'est plus alimentée, la pression pneumatique délivrée par les bouteilles 15 pressurise la deuxième chambre 22 du vase à ressort 14.

L'effort généré par la pression appliquée sur le deuxième diaphragme 27 dans la deuxième chambre 22 est supérieur à l'effort généré par le deuxième ressort 29 de sorte que la tige 25 rentre dans la première chambre 21 désactivant les freins 16.

En outre, lorsque le rideau 3 est en position ouverte, les moyens de détection 9 mesurent toujours la distance D₁.

Si la valeur absolue de la dérivée temporelle de la distance entre la semi-remorque 2 accosté au quai 1 et immobilisé est supérieure à un seuil d'alarme prédéterminé, les moyens de détection 9 délivrent un signal d'alarme aux moyens de contrôle 6 du quai 1.

Les moyens de contrôle 6 du quai 1 commandent une interface homme-machine pour informer les opérateurs présents à proximité du quai 1 que la semi-remorque 2 n'est plus immobilisée.

Si un défaut apparaît, la position des freins 16 reste dans l'état antérieur à l'apparition du défaut.

Par exemple, lorsque les freins 16 de la semi-remorque 2 sont actionnés et les moyens de contrôle 6 du quai 1 sont défaillants, la semi-remorque 2 reste immobilisée.

En outre, lorsque le canal de communication est établi entre les moyens de contrôle 6 du quai 1 et les moyens de contrôle 10 de la semi-remorque 2, des données d'exploitation peuvent être échangées entre le quai 1 et de la semi-remorque 2.

Les données d'exploitation comprennent par exemple un ou plusieurs éléments parmi le numéro de parc du véhicule routier, le nom du transporteur, le destinataire des marchandises, le type de marchandises, un nombre de palettes contenus dans le véhicule routier, l'heure de début de chargement/déchargement, la durée de chargement/déchargement, l'heure de départ du véhicule routier.

Les données d'exploitation peuvent également comprendre des données représentatives de l'état du véhicule routier telles que l'état des freins du véhicule routier, un défaut sur le véhicule routier.

L'échange des données d'exploitation permet d'accélérer la transmission des données d'exploitation qui s'effectuent généralement par l'échange de bordereaux papier entre le conducteur de la semi-remorque 2 et un opérateur du quai 1.

Dans l'exemple qui vient d'être décrit, durant l'étape 60, les moyens de détection détectent la présence de la semi-remorque 2 et déterminent la distance minimale entre celle-ci et le quai 1.

En variante, durant l'étape 60, les moyens de détection 9 pourrait détecter uniquement la présence de la semi-remorque 2.

Si la présence de la semi-remorque 2 est détectée (étape 61), durant l'étape 62, le premier dispositif d'émission 7a des moyens d'émission 7 du quai 1 émet le signal d'initialisation Sinit et le procédé se poursuit comme décrit précédemment.

La figure 7 illustre schématiquement un premier exemple de réalisation d'un véhicule routier de transport de marchandises du type porteur 80 lors de sa mise à quai. Sur la figure 7, les éléments identiques à l'exemple précédemment décrit portent les mêmes références.

Le véhicule porteur 80 comprend un moteur de propulsion 81, une unité de contrôle 82 du moteur, les moyens de contrôle 10, les moyens d'émission 11, les moyens de réception 12, et des moyens d'immobilisation 83 comprenant l'unité de contrôle 82.

Les moyens de contrôle 10 sont reliés à l'unité de contrôle 82 de sorte que lorsque le signal d'activation Sact émis par les moyens d'émission 7 du quai 1 est reçu par les moyens de réception 12 de la semi-remorque 2, les moyens de contrôle 10 du véhicule 80 délivrent un signal d'anti-démarrage Sad à l'unité de contrôle 82. Le signal d'antidémarrage Sad comprend une tension prédéterminée, par exemple une tension continue de 12 volts, 24 volts ou 48 volts générée par les moyens de contrôle 10.

A la réception du signal d'anti-démarrage Sad, l'unité de contrôle 82 éteint le moteur de propulsion 81 ou empêche un démarrage du moteur de propulsion 81.

Les moyens d'émission 11 du véhicule 80 émettent alors le signal de verrouillage Sverr.

Les moyens d'émission 11 émettent le signal de verrouillage Sverr à la réception par les moyens de contrôle 10 d'un signal de déclenchement émis par les moyens d'immobilisation 43 tant que le moteur de propulsion 41 est éteint.

A la réception du signal de désactivation Sdeact par les moyens de contrôle 10 de la semi-remorque 2, les moyens de contrôle 10 cessent d'émettre le signal d'anti-démarrage Sad de sorte qu'un démarrage du moteur 81 est à nouveau possible.

La figure 8 illustre schématiquement un deuxième exemple de réalisation du véhicule routier de transport de marchandises du type porteur 80. Sur la figure 8, les éléments identiques à l'exemple précédemment décrit portent les mêmes références.

Le véhicule porteur 80 comprend un dispositif de freinage 84 qui peut être piloté par l'unité de contrôle 82. L'unité de contrôle 82 peut être l'unité de contrôle du moteur comme dans l'exemple de réalisation précédent ou une unité de contrôle propre au pilotage du dispositif de freinage 84.

Le dispositif de freinage 84 permet d'immobiliser en position le porteur 80 lorsqu'il est actionné. Le dispositif de freinage 84 comprend des freins du type à disque ou à tambour et est commandé électriquement par l'unité 82.

Les moyens de contrôle 10 sont reliés à l'unité de contrôle 82 de sorte que lorsque le signal d'activation Sact émis par les moyens d'émission 7 du quai 1 est reçu par les moyens de réception 12 du porteur 80, les moyens de contrôle 10 du porteur 80 délivrent un signal de freinage Sfr électrique à l'unité de contrôle 82. Le signal de freinage Sfr comprend une tension prédéterminée, par exemple une tension continue de 12 volts, 24 volts ou 48 volts générée par les moyens de contrôle 10.

A la réception du signal de freinage Sfr, l'unité de contrôle 82 active le dispositif de freinage 84 du porteur 80 ou empêche la désactivation dudit dispositif de freinage 84 de sorte que le porteur 80 est immobilisé en position.

Les moyens d'émission 11 émettent alors le signal de verrouillage Sverr.

A la réception du signal de désactivation Sdeact par les moyens de contrôle 10 du véhicule 2, les moyens de contrôle 10 cessent d'émettre le signal de freinage Sfr de sorte que le dispositif de freinage 84 est désactivé permettant un déplacement en position du porteur 80.

Dans les exemples de réalisation illustré, l'équipement du quai 1 est un rideau coulissant. Alternativement, l'équipement peut être une passerelle montée mobile à rotation par rapport au quai entre une position verticale de non-utilisation et une position abaissée horizontale de chargement/déchargement.

## Revendications

1. Procédé de commande d'un équipement (3) de quai de chargement (1) qui est mobile entre une position de non-utilisation et une position de chargement/déchargement, le procédé comprenant :
- une étape de détection d'un véhicule routier (2, 80) de transport de marchandises par des moyens de détection (9) disposés sur le quai de chargement,
- une étape d'émission d'un signal d'initialisation (Sinit) par des moyens d'émission (7) disposés sur le quai lorsque le véhicule routier est détecté par les moyens de détection (9),
- une étape de réception du signal d'initialisation (Sinit) par des moyens de réception (12) disposés sur le véhicule,
- une étape d'émission d'un signal d'identification (Sid) émis par des moyens d'émission (11) disposés sur le véhicule lors de la réception du signal d'initialisation (Sinit) par les moyens de réception (12),
- une étape de réception, par des moyens de réception (8) disposés sur le quai, du signal d'identification (Sid) émis par les moyens d'émission (11),
- une étape d'établissement d'un canal de communication entre des moyens de contrôle (6) du déplacement de l'équipement qui sont disposés sur le quai (1) et des moyens de contrôle (10) disposés sur le véhicule (2, 80) lorsque les moyens de réception (8) disposés sur le quai réceptionnent le signal d'identification (S_{ID}),
- une étape d'actionnement manuel de moyens de commande (4) à actionnement manuel pour commander le déplacement de l'équipement (3) de la position de non-utilisation vers la position de chargement/déchargement,
- une étape d'immobilisation en position du véhicule (2, 80) lors de l'actionnement manuel des moyens de commande (4) à actionnement manuel lorsque le canal de communication est établi et si la distance minimale entre le véhicule et le quai déterminée par les moyens de détection (9) est inférieure ou égale à une distance de détection prédéterminée, et
- une étape de déplacement de l'équipement (3) vers la position de chargement/déchargement uniquement après la réception d'un signal de verrouillage (Sverr) par les moyens de contrôle (6) du déplacement de l'équipement, ledit signal de verrouillage (Sverr) étant émis par les moyens de contrôle (10) disposés sur le véhicule (2, 80) lorsque le véhicule est immobilisé en position.

2. Procédé selon la revendication 1, dans lequel le signal d'initialisation (Sinit) est émis par les moyens d'émission (7) disposés sur le quai lorsqu'en outre la distance minimale déterminée par les moyens de détection (9) est inférieure ou égale à la distance de détection prédéterminée.

3. Procédé selon la revendication 1 ou 2, dans lequel le canal de communication est établi entre des moyens de contrôle (6) du déplacement de l'équipement qui sont disposés sur le quai (1) et des moyens de contrôle (10) disposés sur le véhicule (2, 80) lorsqu'en outre la distance minimale déterminée par les moyens de détection (9) est inférieure ou égale à la distance de détection prédéterminée.

4. Procédé selon l'une quelconques des revendications 1 à 3, dans lequel l'étape d'immobilisation en position du véhicule (2, 80) comprend :
- une étape d'émission par les moyens de contrôle (6) du quai d'un signal d'activation (Sact) dans le canal de communication,
- une étape d'actionnement de moyens d'immobilisation (13, 83) en position du véhicule, les moyens d'immobilisation (13, 83) étant activés par les moyens de contrôle (10) disposés sur le véhicule lors de la réception du signal d'activation (Sact) par lesdits moyens de contrôle (10), les moyens d'immobilisation (13, 83) étant disposés sur le véhicule, et
- une étape d'émission du signal de verrouillage (Sverr) à travers le canal de communication par les moyens de contrôle (10) lorsque le véhicule est immobilisé en position par les moyens d'immobilisation (13, 83),
- l'étape de déplacement de l'équipement (3) vers la position de chargement/déchargement étant réalisée uniquement après la réception du signal de verrouillage (Sverr) par les moyens de contrôle (6) disposés sur le quai.

5. Procédé selon la revendication 4, dans lequel l'actionnement des moyens d'immobilisation (13) du véhicule comprend l'activation d'un dispositif de freinage de parc dudit véhicule.

6. Procédé selon la revendication 5, le dispositif de freinage de parc du véhicule comprenant un vase à ressort (14) actionnant des freins (16) du véhicule (2), l'activation du dispositif de freinage de parc dudit véhicule comportant la dépressurisation du vase à ressort, le signal de verrouillage (Sverr) étant émis par des moyens de contrôle (10) à travers le canal de communication lorsque la pression d'une chambre (22) du vase à ressort est inférieure ou égale à une pression prédéterminée.

7. Procédé selon la revendication 4, dans lequel l'actionnement des moyens d'immobilisation (83) du véhicule comprend l'émission d'un signal d'anti-démarrage (Sad), le signal d'anti-démarrage étant configuré pour éteindre un moteur de propulsion du véhicule routier de transport de marchandises (80) ou empêcher le démarrage dudit moteur.

8. Procédé selon la revendication 4 ou 7, dans lequel l'actionnement des moyens d'immobilisation (83) du véhicule comprend l'émission d'un signal de freinage (Sfr), le signal de freinage étant configuré pour activer un dispositif de freinage (44) du véhicule ou empêcher la désactivation dudit dispositif de freinage

9. Procédé selon l'une des revendications 1 à 8, comportant en outre au moins un échange de données d'exploitation par le canal de communication entre les moyens de contrôle (6) disposés sur le quai et les moyens de contrôle (10) disposés sur le véhicule.

10. Procédé selon l'une des revendications 1 à 9, dans lequel les moyens de détection (9) délivrent un signal d'alarme lorsque la valeur absolue de la dérivée temporelle de la distance minimale déterminée est supérieure à un seuil d'alarme prédéterminé.

11. Procédé selon l'une des revendications 1 à 10, dans lequel les moyens de détection (9) déterminent en permanence la distance minimale entre le véhicule et le quai.

12. Dispositif de commande d'un équipement (3) de quai de chargement (1) qui est mobile entre une position de non-utilisation et une position de chargement/déchargement, le dispositif comprenant :
- des moyens de détection (9) disposés sur le quai de chargement et configurés pour détecter un véhicule routier de transport de marchandises (2, 80),
- des moyens d'émission (7) disposés sur le quai et configurés pour émettre un signal d'initialisation (Sinit) lorsque le véhicule routier est détecté par les moyens de détection (9),
- des moyens de réception (8) disposés sur le quai,
- des moyens de réception (12) disposés sur le véhicule,
- des moyens d'émission (11) disposés sur le véhicule et configurés pour émettre un signal d'identification (Sid) lors de la réception du signal d'initialisation (Sinit) par les moyens de réception (12) disposés sur le véhicule,
- des moyens de contrôle (6) du déplacement de l'équipement qui sont disposés sur le quai et des moyens de contrôle (10) disposés sur le véhicule, les moyens de du déplacement de l'équipement et les moyens de contrôle disposés sur le véhicule étant configurés pour établir un canal de communication lorsque les moyens de réception disposés sur le quai réceptionnent le signal d'identification émis par les moyens d'émission disposés sur le véhicule,
- des moyens de commande à actionnement manuel (4) disposés sur le quai et configurés pour commander le déplacement de l'équipement (3) de la position de non-utilisation vers la position de chargement/déchargement,
- des moyens d'immobilisation (13, 43) en position du véhicule configurés pour immobiliser le véhicule en position lors de l'actionnement manuel des moyens de commande (4) à actionnement manuel, lorsque le canal de communication est établi et si la distance minimale entre le véhicule et le quai déterminée par les moyens de détection (9) est inférieure ou égale à une distance de détection prédéterminée, les moyens de contrôle (10) du véhicule étant en outre configurés pour commander les moyens d'immobilisation et émettre un signal de verrouillage (Sverr) lorsque le véhicule est immobilisé en position,
- les moyens de contrôle (6) du déplacement de l'équipement étant en outre configurés pour rendre inopérant l'actionnement manuel des moyens de commande (4) pour empêcher le déplacement de l'équipement (3) de la position de non-utilisation vers la position de chargement/déchargement, lorsque le véhicule n'est pas immobilisé en position en l'absence de la réception d'un signal du verrouillage (Sverr) par les moyens de contrôle (6) du déplacement de l'équipement.

13. Dispositif de commande selon la revendication 12, dans lequel :
- les moyens de contrôle (6) du déplacement de l'équipement sont en outre configurés pour émettre un signal d'activation (Sact) dans le canal de communication,
- les moyens de contrôle (10) disposés sur le véhicule sont en outre configurés pour activer les moyens d'immobilisation (13, 83) en position du véhicule routier de transport de marchandises lors la réception du signal d'activation (Sact), et pour émettre le signal de verrouillage (Sverr) dans le canal de communication lorsque le véhicule est immobilisé en position par les moyens d'immobilisation, et
- les moyens de contrôle (6) du déplacement de l'équipement sont en outre configurés pour rendre inopérant, en l'absence du signal de verrouillage (Sverr), l'actionnement manuel des moyens de commande (4) pour empêcher le déplacement de l'équipement (3) de la position de non-utilisation vers la position de chargement/déchargement.

14. Dispositif de commande selon la revendication 12 ou 13, dans lequel les moyens d'immobilisation (13) comprennent un dispositif de freinage de parc du véhicule (2).

15. Dispositif de commande selon la revendication 14, dans lequel le dispositif de freinage de parc du véhicule comprend un vase à ressort (14) configuré pour actionner des freins (16) du véhicule (2), les moyens de contrôle (10) du véhicule étant configurés pour dépressuriser le vase à ressort et émettre le signal de verrouillage (Sverr) lorsque la pression à un orifice du vase à ressort est inférieure ou égale à une pression prédéterminée.

## Patentansprüche

1. Verfahren zum Steuern einer Ausrüstung (3) einer Verladeplattform (1), die zwischen einer Nichtgebrauchsposition und einer Be-/Entladeposition beweglich ist, wobei das Verfahren Folgendes umfasst:
- einen Schritt des Erkennens eines Straßenfahrzeugs für den Gütertransport (2, 80) durch an der Verladeplattform angeordnete Erkennungsmittel (9),
- einen Schritt des Sendens eines Initialisierungssignals (Sinit) durch an der Plattform angeordnete Sendemittel (7), wenn das Straßenfahrzeug von den Erkennungsmitteln (9) erkannt wird,
- einen Schritt des Empfangens des Initialisierungssignals (Sinit) durch am Fahrzeug angeordnete Empfangsmittel (12),
- einen Schritt des Sendens eines von Sendemitteln (11), die am Fahrzeug angeordnet sind, gesendeten Identifikationssignals (Sid) beim Empfang des Initialisierungssignals (Sinit) durch die Empfangsmittel (12),
- einen Schritt des Empfangens, durch an der Plattform angeordnete Empfangsmittel (8), des von den Sendemitteln (11) gesendeten Identifikationssignals (Sid),
- einen Schritt des Einrichtens eines Kommunikationskanals zwischen den an der Plattform (1) angeordneten Kontrollmitteln (6) für die Bewegung der Ausrüstung und den am Fahrzeug (2, 80) angeordneten Kontrollmitteln (10), wenn die an der Plattform angeordneten Empfangsmittel (8) das Identifikationssignal (S_{ID}) empfangen,
- einen Schritt des manuellen Betätigens von manuell betätigbaren Steuermitteln (4) zum Steuern der Bewegung der Ausrüstung (3) von der Nichtgebrauchsposition in die Be-/Entladeposition,
- einen Schritt des Feststellens des Fahrzeugs (2, 80) in seiner Position bei der manuellen Betätigung der manuell betätigbaren Steuermittel (4), wenn der Kommunikationskanal hergestellt ist und wenn der von den Erkennungsmitteln (9) bestimmte Mindestabstand zwischen dem Fahrzeug und der Plattform kleiner oder gleich einem vorbestimmten Erkennungsabstand ist, und
- einen Schritt des Bewegens der Ausrüstung (3) in die Be-/Entladeposition erst nach Empfang eines Verriegelungssignals (Sverr) durch die Kontrollmittel (6) für die Bewegung der Ausrüstung, wobei das Verriegelungssignal (Sverr) von den am Fahrzeug (2, 80) angeordneten Steuermitteln (10) gesendet wird, wenn das Fahrzeug in seiner Position feststeht.

2. Verfahren nach Anspruch 1, wobei das Initialisierungssignal (Sinit) von den an der Plattform angeordneten Sendemitteln (7) gesendet wird, wenn ferner der von den Erkennungsmitteln (9) bestimmte Mindestabstand kleiner oder gleich dem vorbestimmten Erkennungsabstand ist.

3. Verfahren nach Anspruch 1 oder 2, wobei der Kommunikationskanal zwischen den an der Plattform (1) angeordneten Kontrollmitteln (6) für die Bewegung der Ausrüstung und den am Fahrzeug (2, 80) angeordneten Kontrollmitteln (10) hergestellt wird, wenn ferner der von den Erkennungsmitteln (9) bestimmte Mindestabstand kleiner oder gleich dem vorbestimmten Erkennungsabstand ist.

4. Verfahren nach einem der Ansprüche 1 bis 3, wobei der Schritt des Feststellens des Fahrzeugs (2, 80) in seiner Position Folgendes umfasst:
- einen Schritt des Sendens eines Aktivierungssignals (Sact) im Kommunikationskanal durch die Steuerungsmittel (6) der Plattform,
- einen Schritt des Betätigens von Mitteln zum Feststellen (13, 83) des Fahrzeugs in seiner Position, wobei die Feststellmittel (13, 83) durch die am Fahrzeug angeordneten Kontrollmittel (10) beim Empfang des Aktivierungssignals (Sact) durch die Kontrollmittel (10) aktiviert werden, wobei die Feststellmittel (13, 83) am Fahrzeug angeordnet sind, und
- einen Schritt des Sendens des Verriegelungssignals (Sverr) über den Kommunikationskanal durch die Kontrollmittel (10), wenn das Fahrzeug durch die Feststellmittel (13, 83) in seiner Position festgestellt wird,
- wobei der Schritt des Bewegens der Ausrüstung (3) in die Be-/Entladeposition erst nach Empfang des Verriegelungssignals (Sverr) durch die an der Plattform angeordneten Kontrollmittel (6) durchgeführt wird.

5. Verfahren nach Anspruch 4, wobei das Betätigen der Feststellmittel (13) des Fahrzeugs das Aktivieren einer Parkbremseinrichtung des Fahrzeugs umfasst.

6. Verfahren nach Anspruch 5, wobei die Parkbremsvorrichtung des Fahrzeugs einen Federspeicher (14) umfasst, der die Bremsen (16) des Fahrzeugs (2) betätigt, wobei die Aktivierung der Parkbremsvorrichtung des Fahrzeugs die Druckentlastung des Federspeichers enthält, wobei das Verriegelungssignal (Sverr) von Kontrollmitteln (10) über den Kommunikationskanal gesendet wird, wenn der Druck in einer Kammer (22) des Federspeichers kleiner oder gleich einem vorbestimmten Druck ist.

7. Verfahren nach Anspruch 4, wobei das Betätigen der Feststellmittel (83) des Fahrzeugs das Senden eines Wegfahrsperrsignals (Sad) umfasst, wobei das Wegfahrsperrsignal so konfiguriert ist, dass es einen Antriebsmotor des Straßenfahrzeugs für den Gütertransport (80) abschaltet oder das Starten des Motors verhindert.

8. Verfahren nach Anspruch 4 oder 7, wobei die Betätigung der Feststellmittel (83) des Fahrzeugs das Senden eines Bremssignals (Sfr) umfasst, wobei das Bremssignal so konfiguriert ist, dass es eine Bremsvorrichtung (44) des Fahrzeugs aktiviert oder die Deaktivierung der Bremsvorrichtung verhindert.

9. Verfahren nach einem der Ansprüche 1 bis 8, das ferner mindestens einen Austausch von Betriebsdaten über den Kommunikationskanal zwischen den an der Plattform angeordneten Kontrollmitteln (6) und den am Fahrzeug angeordneten Kontrollmitteln (10) enthält.

10. Verfahren nach einem der Ansprüche 1 bis 9, wobei die Erkennungsmittel (9) ein Alarmsignal ausgeben, wenn der absolute Wert der zeitlichen Ableitung des bestimmten Mindestabstands über einem vorbestimmten Alarmschwellenwert liegt.

11. Verfahren nach einem der Ansprüche 1 bis 10, wobei die Erkennungsmittel (9) permanent den Mindestabstand zwischen dem Fahrzeug und der Plattform bestimmen.

12. Steuervorrichtung für eine Ausrüstung (3) einer Verladeplattform (1), die zwischen einer Nichtgebrauchsposition und einer Be-/Entladeposition beweglich ist, wobei die Vorrichtung Folgendes umfasst:
- Erkennungsmittel (9), die an der Verladeplattform angeordnet und so konfiguriert sind, dass sie ein Straßenfahrzeug für den Gütertransport (2, 80) erkennen,
- Sendemittel (7), die an der Plattform angeordnet und so konfiguriert sind, dass sie ein Initialisierungssignal (Sinit) senden, wenn das Straßenfahrzeug von den Erkennungsmitteln (9) erkannt wird,
- Empfangsmittel (8), die an der Plattform angeordnet sind,
- Empfangsmittel (12), die am Fahrzeug angeordnet sind,
- Sendemittel (11), die am Fahrzeug angeordnet und so konfiguriert sind, dass sie beim Empfang des Initialisierungssignals (Sinit) durch die am Fahrzeug angeordneten Empfangsmittel (12) ein Identifikationssignal (Sid) senden,
- Kontrollmittel (6) für die Bewegung der Ausrüstung, die an der Plattform angeordnet sind, und Kontrollmittel (10), die am Fahrzeug angeordnet sind, wobei die am Fahrzeug angeordneten Mittel für die Bewegung der Ausrüstung und die am Fahrzeug angeordneten Kontrollmittel so konfiguriert sind, dass sie einen Kommunikationskanal herstellen, wenn die an der Plattform angeordneten Empfangsmittel das von den am Fahrzeug angeordneten Sendemitteln gesendete Identifikationssignal empfangen,
- manuell betätigbare Steuermittel (4), die an der Plattform angeordnet und so konfiguriert sind, dass sie die Bewegung der Ausrüstung (3) von der Nichtgebrauchsposition in die Be-/Entladeposition steuern,
- Mittel zum Feststellen (13, 43) des Fahrzeugs in seiner Position, die so konfiguriert sind, dass sie das Fahrzeug bei der manuellen Betätigung der manuell betätigbaren Steuermittel (4) in seiner Position feststellen, wenn der Kommunikationskanal hergestellt ist und wenn der von den Erkennungsmitteln (9) bestimmte Mindestabstand zwischen dem Fahrzeug und der Plattform kleiner oder gleich einem vorbestimmten Erkennungsabstand ist, wobei die Kontrollmittel (10) des Fahrzeugs ferner so konfiguriert sind, dass sie die Feststellmittel steuern und ein Verriegelungssignal (Sverr) senden, wenn das Fahrzeug in seiner Position festgestellt wird,
- wobei die Kontrollmittel (6) für die Bewegung der Ausrüstung ferner so konfiguriert sind, dass sie die manuelle Betätigung der Steuermittel (4) unwirksam machen, um die Bewegung der Ausrüstung (3) von der Nichtgebrauchsposition in die Be-/Entladeposition zu verhindern, wenn bei Fehlen des Empfangs eines Verriegelungssignals (Sverr) durch die Kontrollmittel (6) für die Bewegung der Ausrüstung das Fahrzeug nicht in seiner Position festgestellt wird.

13. Steuervorrichtung nach Anspruch 12, wobei:
- die Kontrollmittel (6) für die Bewegung der Ausrüstung ferner so konfiguriert sind, dass sie ein Aktivierungssignal (Sact) im Kommunikationskanal senden,
- die am Fahrzeug angeordneten Kontrollmittel (10) ferner so konfiguriert sind, dass sie die Mittel zum Feststellen (13, 83) des Straßenfahrzeugs für den Gütertransport in seiner Position beim Empfang des Aktivierungssignals (Sact) aktivieren und das Verriegelungssignal (Sverr) im Kommunikationskanal senden, wenn das Fahrzeug durch die Feststellmittel in seiner Position festgestellt wird, und
- die Kontrollmittel (6) für die Bewegung der Ausrüstung ferner so konfiguriert sind, dass sie bei Fehlen des Verriegelungssignals (Sverr) die manuelle Betätigung der Steuermittel (4) unwirksam machen, um die Bewegung der Ausrüstung (3) von der Nichtgebrauchsposition in die Be-/Entladeposition zu verhindern.

14. Steuervorrichtung nach Anspruch 12 oder 13, wobei die Feststellmittel (13) eine Parkbremsvorrichtung des Fahrzeugs (2) umfassen.

15. Steuervorrichtung nach Anspruch 14, wobei die Parkbremsvorrichtung des Fahrzeugs einen Federspeicher (14) umfasst, der so konfiguriert ist, dass er die Bremsen (16) des Fahrzeugs (2) betätigt, wobei die Kontrollmittel (10) des Fahrzeugs so konfiguriert sind, dass sie den Federspeicher drucklos machen und das Verriegelungssignal (Sverr) ausgeben, wenn der Druck an einer Öffnung des Federspeichers kleiner oder gleich einem vorbestimmten Druck ist.

## Claims

1. Method for controlling loading dock (1) equipment (3) that is movable between a non-use position and a loading/unloading position, the method comprising:
- a step of detecting a road vehicle for transporting goods (2, 80) by detection means (9) disposed on the loading dock,
- a step of transmitting an initialisation signal (Sinit) by transmission means (7) disposed on the dock when the road vehicle is detected by the detection means (9),
- a step of receiving the initialisation signal (Sinit) by reception means (12) disposed on the vehicle,
- a step of transmitting an identification signal (Sid) transmitted by transmission means (11) disposed on the vehicle during the reception of the initialisation signal (Sinit) by the reception means (12),
- a step of receiving, by reception means (8) disposed on the dock, the identification signal (Sid) transmitted by the transmission means (11),
- a step of establishing a communication channel between means for controlling (6) the movement of the equipment that is disposed on the dock (1) and control means (10) disposed on the vehicle (2, 80) when the reception means (8) disposed on the dock receive the identification signal (S_{ID}),
- a step of manually actuating manually actuated means for controlling (4) the movement of the equipment (3) from the non-use position to the loading/unloading position,
- a step of immobilising the vehicle (2, 80) in position during the manual actuation of the manually actuated control means (4) when the communication channel is established and if the minimum distance between the vehicle and the dock determined by the detection means (9) is less than or equal to a predetermined detection distance, and
- a step of moving the equipment (3) to the loading/unloading position only after receiving a locking signal (Sverr) by the means for controlling (6) the movement of the equipment, said locking signal (Sverr) being transmitted by the control means (10) disposed on the vehicle (2, 80) when the vehicle is immobilised in position.

2. Method according to claim 1, wherein the initialisation signal (Sinit) is transmitted by the transmission means (7) disposed on the dock when furthermore the minimum distance determined by the detection means (9) is less than or equal to the predetermined detection distance.

3. Method according to claim 1 or 2, wherein the communication channel is established between means for controlling (6) the movement of the equipment that is disposed on the dock (1) and control means (10) that are disposed on the vehicle (2, 80) when furthermore the minimum distance determined by the detection means (9) is less than or equal to the predetermined detection distance.

4. Method according to any one of claims 1 to 3, wherein the step of immobilising the vehicle (2, 80) in position comprises:
- a step of transmitting by the control means (6) of the dock an activation signal (Sact) in the communication channel,
- a step of actuating means for immobilising (13, 83) the vehicle in position, the immobilisation means (13, 83) being activated by the control means (10) disposed on the vehicle during the reception of the activation signal (Sact) by said control means (10), the immobilisation means (13, 83) being disposed on the vehicle, and
- a step of transmitting the locking signal (Sverr) through the communication channel by the control means (10) when the vehicle is immobilised in position by the immobilisation means (13, 83),
- the step of moving the equipment (3) to the loading/unloading position being performed only after receiving the locking signal (Sverr) by the control means (6) disposed on the dock.

5. Method according to claim 4, wherein actuating the immobilisation means (13) of the vehicle comprises activating a parking braking device of said vehicle.

6. Method according to claim 5, the parking braking device of the vehicle comprising a spring reservoir (14) actuating brakes (16) of the vehicle (2), the activation of the parking braking device of said vehicle including depressurising the spring reservoir, the locking signal (Sverr) being transmitted by control means (10) through the communication channel when the pressure of a chamber (22) of the spring reservoir is less than or equal to a predetermined pressure.

7. Method according to claim 4, wherein actuating the immobilisation means (83) of the vehicle comprises transmitting an anti-start signal (Sad), the anti-start signal being configured to switch off a propulsion motor of the road vehicle for transporting goods (80) or prevent starting said motor.

8. Method according to claim 4 or 7, wherein actuating the immobilisation means (83) of the vehicle comprises transmitting a braking signal (Sfr), the braking signal being configured to activate a device for braking (44) the vehicle or prevent deactivation of said braking device

9. Method according to one of claims 1 to 8, further including at least one exchange of operating data by the communication channel between the control means (6) disposed on the dock and the control means (10) disposed on the vehicle.

10. Method according to one of claims 1 to 9, wherein the detection means (9) deliver an alarm signal when the absolute value of the time derivative of the determined minimum distance is greater than a predetermined alarm threshold.

11. Method according to one of claims 1 to 10, wherein the detection means (9) permanently determine the minimum distance between the vehicle and the dock.

12. Device for controlling loading dock (1) equipment (3) that is movable between a non-use position and a loading/unloading position, the device comprising:
- detection means (9) disposed on the loading dock and configured to detect a road vehicle for transporting goods (2, 80),
- transmission means (7) disposed on the dock and configured to transmit an initialisation signal (Sinit) when the road vehicle is detected by the detection means (9),
- reception means (8) disposed on the dock,
- reception means (12) disposed on the vehicle,
- transmission means (11) disposed on the vehicle and configured to transmit an identification signal (Sid) during the reception of the initialisation signal (Sinit) by the reception means (12) disposed on the vehicle,
- means for controlling (6) the movement of the equipment that is disposed on the dock and control means (10) disposed on the vehicle, the means for moving the equipment and the control means disposed on the vehicle being configured to establish a communication channel when the reception means disposed on the dock receive the identification signal transmitted by the transmission means disposed on the vehicle,
- manually actuated control means (4) disposed on the dock and configured to control the movement of the equipment (3) from the non-use position to the loading/unloading position,
- means for immobilising (13, 43) the vehicle in position configured to immobilise the vehicle in position during the manual actuation of the manually actuated control means (4), when the communication channel is established and if the minimum distance between the vehicle and the dock determined by the detection means (9) is less than or equal to a predetermined detection distance, the control means (10) of the vehicle being further configured to control the immobilisation means and transmit a locking signal (Sverr) when the vehicle is immobilised in position,
- means for controlling (6) the movement of the equipment being further configured to render inoperable the manual actuation of the control means (4) to prevent the movement of the equipment (3) from the non-use position to the loading/unloading position, when the vehicle is not immobilised in position in the absence of the reception of a signal of the locking (Sverr) by the means for controlling (6) the movement of the equipment.

13. Control device according to claim 12, wherein:
- the means for controlling (6) the movement of the equipment are further configured to transmit an activation signal (Sact) in the communication channel,
- the control means (10) disposed on the vehicle are further configured to activate the means for immobilising (13, 83) the road vehicle for transporting goods in position during the reception of the activation signal (Sact), and to transmit the locking signal (Sverr) in the communication channel when the vehicle is immobilised in position by the immobilisation means, and
- the means for controlling (6) the movement of the equipment are further configured to render inoperative, in the absence of the locking signal (Sverr), the manual actuation of the control means (4) to prevent the movement of the equipment (3) from the non-use position to the loading/unloading position.

14. Control device according to claim 12 or 13, wherein the immobilisation means (13) comprise a parking braking device of the vehicle (2).

15. Control device according to claim 14, wherein the parking braking device of the vehicle comprises a spring reservoir (14) configured to actuate brakes (16) of the vehicle (2), the control means (10) of the vehicle being configured to depressurise the spring reservoir and transmit the locking signal (Sverr) when the pressure at an orifice of the spring reservoir is less than or equal to a predetermined pressure.
